# EUROPEAN PATENT SPECIFICATION

(11) **EP 4 111 713 B1**
(45) Date of publication and mention of the grant of the patent: **15.10.2025**
(21) Application number: 20889341.2
(22) Date of filing: 25.03.2020
(51) Int. Cl.: H04W 4/06, H04W 76/40

(54) **MULTICAST OR BROADCAST SESSION ESTABLISHMENT AND MANAGEMENT**
AUFBAU UND VERWALTUNG EINER MULTICAST- ODER BROADCAST-SITZUNG
ÉTABLISSEMENT ET GESTION DE SESSION DE DIFFUSION/MULTIDIFFUSION

(43) Date of publication of application: 04.01.2023
(73) Proprietor: ZTE Corporation, Shenzhen, Guangdong 518057 (CN)
(72) Inventor: ZHU, Jinguo, Shenzhen, Guangdong 518057 (CN); LI, Zhendong, Shenzhen, Guangdong 518057 (CN); LIANG, Shuang, Shenzhen, Guangdong 518057 (CN)
(74) Representative: Vossius & Partner Patentanwälte Rechtsanwälte mbB
(86) International application number: PCT/CN2020/081045
(87) International publication number: WO 2021/098108

(56) References cited:
- WO-A1-2019/190674
- CN-A- 109 699 013
- SAMSUNG: "5G MBMS Procedure", vol. SA WG2, no. Dongguan, China; 20181015 - 20181019, 8 October 2018 (2018-10-08), XP051539297, Retrieved from the Internet <URL:http://www.3gpp.org/ftp/tsg%5Fsa/WG2%5FArch/TSGS2%5F129%5FDongguan/Docs/S2%2D1810311%2Ezip> [retrieved on 20181008]
- SAMSUNG: "5G MBMS Architecture", vol. SA WG2, no. Sophia Antipolis, France; 20180820 - 20180824, 26 August 2018 (2018-08-26), XP051537411, Retrieved from the Internet <URL:http://www.3gpp.org/ftp/tsg%5Fsa/WG2%5FArch/TSGS2%5F128BIS%5FSophia%5FAntipolis/Docs/S2%2D188560%2Ezip> [retrieved on 20180826]
- SAMSUNG: "5G MBMS Procedure", 3GPP DRAFT; S2-1810311 5G MBMS PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Dongguan, China; 20181015 - 20181019, 8 October 2018 (2018-10-08), Mobile Competence Centre ; 650, route des Lucioles ; F-06921 Sophia-Antipolis Cedex ; France, XP051539297
- SAMSUNG: "5G MBMS Architecture", 3GPP DRAFT; S2-188560 WAS 8385 WAS 7850 5G MBMS ARCHITECTURE REV1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Sophia Antipolis, France; 20180820 - 20180824, 26 August 2018 (2018-08-26), Mobile Competence Centre ; 650, route des Lucioles ; F-06921 Sophia-Antipolis Cedex ; France, XP051537411

## Description

### TECHNICAL FIELD

This patent document is directed generally to wireless communications.

### BACKGROUND

Mobile communication technologies are moving the world toward an increasingly connected and networked society. The rapid growth of mobile communications and advances in technology have led to greater demand for capacity and connectivity. Other aspects, such as energy consumption, device cost, spectral efficiency, and latency are also important to meeting the needs of various communication scenarios. Various techniques, including new ways to provide higher quality of service, longer battery life, and improved performance are being discussed. 3GPP, S2-1810311 relates to a 5G MBMS procedure.

### SUMMARY

This patent document describes, among other things, techniques that enable flexible multicast or broadcast session establishment and management in different scenarios. The disclosed techniques can be used to manage multicast sessions regardless of when a User Equipment (UE) requests to join a multicast session. The disclosed techniques can also be used in various deployment scenarios, e.g., when the Broadcast and Multicast Service Center (BMSC) is deployed as a separate function or in a distributed manner with other network functions.

The invention is specified by the independent claims. Preferred embodiments are defined in the dependent claims. In the following description, although numerous features may be designated as optional, it is nevertheless acknowledged that all features comprised in the independent claims are not to be read as optional.

In one example aspect, a wireless communication method is disclosed. The method includes receiving, by a broadcast and multicast service center function, a request for establishing a multicast or broadcast session for an application function. The request comprises information indicating a target area for a multicast or broadcast service associated with the multicast or broadcast session. The method also includes determining, by the broadcast and multicast service center function, at least one access and mobility management function based on the information; and transmitting, by the broadcast and multicast service center function, a PDU session trigger message to the at least one access and mobility management function to allow the at least one access and mobility management function to initiate an establishment of the multicast or broadcast session.

In another example aspect, a wireless communication method is disclosed. The method includes receiving, by an access and mobility management function, a session trigger message from a network communication node triggering an establishment of a multicast or broadcast session. The session trigger message comprising an identifier identifying a multicast or broadcast service associated with the multicast or broadcast session. The method also includes transmitting, by the access and mobility management function, a request to a session management function to establish the multicast or broadcast session.

In another example aspect, a wireless communication method is disclosed. The method includes receiving, by a base station, a message from a communication node in a core network, wherein the message includes an identifier identifying a multicast or broadcast service of which a mobile device is authorized to receive data; and receiving, by the base station, a request from the communication node to establish a multicast or broadcast session for the multicast or broadcast service. The request includes an identifier identifying the multicast or broadcast service and a quality of service profile of the multicast or broadcast session. The method includes transmitting, by the base station, a message to the mobile device that is authorized to receive the data for the multicast or broadcast service, the message indicating a resource configuration for the multicast or broadcast session. The resource configuration is determined in part based on the quality of service profile associated with the multicast or broadcast session. The method also includes transmitting, by the base station, the data for the multicast or broadcast session using a resource configured according to the resource configuration.

In another example aspect, a communication apparatus is disclosed. The apparatus includes a processor that is configured to implement an above-described method.

In yet another example aspect, a computer-program storage medium is disclosed. The computer-program storage medium includes code stored thereon. The code, when executed by a processor, causes the processor to implement a described method.

These, and other, aspects are described in the present document.

### BRIEF DESCRIPTION OF DRAWINGS

FIG. 1 illustrates an example architecture of a 5G Multimedia Broadcast Multicast Service (MBMS) system.
FIG. 2 illustrates an example signaling sequence for establishing a unicast Packet Data Unit (PDU) session.
FIG. 3 illustrates an example architecture showing interfaces for a unicast session and a multicast or broadcast session in accordance with present technology.
FIG. 4 illustrates an example flowchart of a method for wireless communication in accordance with the present technology.
FIG. 5 illustrates an example flowchart of another method for wireless communication in accordance with the present technology.
FIG. 6 illustrates an example flowchart of yet another method for wireless communication in accordance with the present technology.
FIG. 7 illustrates an example signaling sequence for requesting a Multicast or Broadcast Service (MBS) configuration in accordance with the present technology.
FIG. 8 illustrates an example signaling sequence for a User Equipment to access an MBS in accordance with the present technology.
FIG. 9 illustrates an example signaling sequence for establishing an MBS session in accordance with the present technology.
FIG. 10 illustrates another example signaling sequence for establishing an MBS session in accordance with the present technology.
FIG. 11 illustrates an example signaling sequence for configuring radio resource for an MBS Session in accordance with the present technology.
FIG. 12 shows an example of a wireless communication system where techniques in accordance with one or more embodiments of the present technology can be applied.
FIG. 13 is a block diagram representation of a portion of a radio station in accordance with one or more embodiments of the present technology can be applied.

### DETAILED DESCRIPTION

Section headings are used in the present document only to improve readability and do not limit scope of the disclosed embodiments and techniques in each section to only that section. Certain features are described using the example of Fifth Generation (5G) wireless protocol. However, applicability of the disclosed techniques is not limited to only 5G wireless systems.

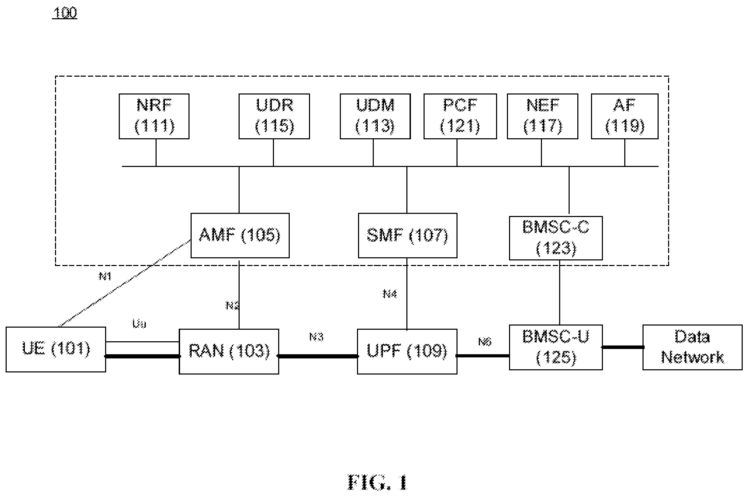

Multimedia Broadcast/Multicast Service (MBMS) may refer to a network architecture in which network resources are used to send the same multimedia content to everyone (e.g., broadcasting) or to a group of subscribers (e.g., multicasting) rather than sending content separately to individual subscribers (e.g., unicasting). With the development of the 5G New Radio (NR) technology, MBMS may provide operational efficiency for Internet of Things (IoT) and Vehicle to Everything (V2X) communications. FIG. 1 illustrates an example architecture of a 5G Multimedia Broadcast Multicast Service (MBMS) system 100. The system 100 includes the following functions:
1.1 User Equipment (UE) 101, such as cell phones, tablets, or other mobile devices.
1.2. Radio Access Network (RAN) 103, such as base stations.
1.3. Access and mobility Management Function (AMF) 105. This function handles the following functionalities: registration management, connection management, reachability management and mobility management. This function also performs the access authentication and access authorization. The AMF is the Non-Access Stratum (NAS) security termination and relays the NAS Session Management (SM) signaling between UE and other network nodes, such as a Session Management Function (SMF).
1.4. Session Management Function (SMF) 107. This function handles the following functionalities: session establishment, modification and release, UE Internet Protocol (IP) address allocation and management (including optional authorization functions), selection and control of uplink function, downlink data notification, etc.
1.5. User Plane Function (UPF) 109. This function handles the following functionalities: serving as an anchor point for intra-/inter-radio access technology (RAT) mobility, packet routing and forwarding, traffic usage reporting, Quality of Service (QoS) handling for the user plane, downlink packet buffering and downlink data notification triggering, etc.
1.6. Network Repository Function (NRF) 111. The NRF stores the Network Function (NF) profile of available NF instances and supported services. The NRF also supports service discovery function. A new network function instance registers its NF profiles in the NRF after the initiation so other network functions can discover the new network function instance by querying the NRF.
1.7. Unified Data Management (UDM) 113.The UDM supports UE registration and subscription management (e.g. storing serving AMF for UE, storing serving SMF for UE's Packet Data Unit (PDU) Session). To provide this functionality, the UDM uses subscription data (including authentication data) that may be stored in the Unified Data Repository (UDR).
1.8. Unified Data Repository (UDR) 115. The Unified Data Repository (UDR) supports storage and retrieval of subscription data by the UDM, storage and retrieval of policy data by the Policy Control Function (PCF), storage and retrieval of structured data for exposure, etc.
1.9. Network Exposure Function (NEF) 117. The NEF supports exposure of capability and events of the network towards the Application Function. The third-party Application Function can invoke the service provide by the network via the NEF and the NEF performs authenticate and authorize of the third-party applications. The NEF also provide translation of the information exchanged with the AF and information exchanged with the internal network function.
1.10. Application Function (AF) 119. The AF interacts with the Third-Generation Partnership Project (3GPP) core network in order to provide services, such as: application influence on traffic routing, Accessing Network Exposure Function, interacting with the Policy framework for policy control etc. The AFs that are trusted by the operator are allowed to interact directly with relevant Network Functions. Application Functions that are not trusted by the operator use the external exposure framework via the NEF to interact with relevant Network Functions.
1.11. Policy Control Function (PCF) 121. The PCF supports unified policy framework to govern network behavior. The PCF provides access management policy to AMF, session management policy to SMF, or UE policy to the UE. The PCF can access the UDR to obtain the subscription information relevant for policy decisions.
1.12. Broadcast and Multicast Service Center (BMSC). In 5G communication systems, the BMSC is deployed to provide Multicast or Broadcast Service (MBS) sessions to application function. In some embodiments, the control plane function of BMSC (BMSC-C 123) and user plane function of BMSC (BMSC-U 125) can be coupled and/or co-located. In some embodiments, the BMSC-C is decoupled from BMSC-U. The BMSC-C and SMF can be deployed together while the BMSC-U and UPF can be deployed together.

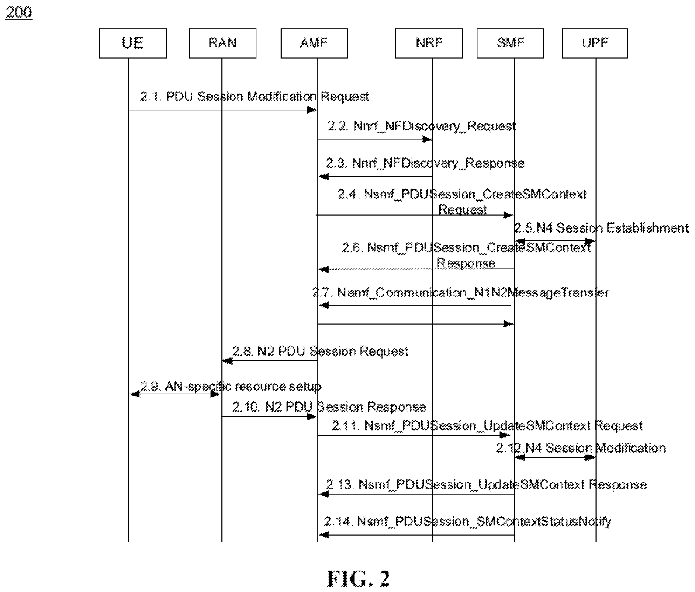

FIG. 2 illustrates an example signaling sequence for establishing a unicast PDU session.

2.1. The UE requests a PDU Session establishment procedure by the transmission of a NAS message containing a PDU Session Establishment Request within the N1 SM container. The PDU Session Establishment Request includes a PDU Session identify (ID), Requested PDU Session Type, Request Single-Network Slicing Selection Assistant Information (S-NSSAI) indicating the network slicing, Requested Date Network Name (DNN), etc.

2.2. The AMF sends Nnrf_NFDiscovery_Request including the relevant parameters to NRF.

2.3. The NRF returns a first list of SMF profiles that match the requested S-NSSAI and requested DNN. The SMF profiles also include SMF service area for each SMF.

2.4. The AMF sends Nsmf_PDUSession_CreateSMContext Request to the selected SMF. This message includes SUPI, DNN, S-NSSAI(s), PDU Session ID, AMF ID, Request Type, N1 SM container that includes PDU Session Establishment Request), User location information, etc.

2.5. The SMF selects UPF for the PDU session. The SMF establishes the N4 association with the selected UPF. The N3 tunnel information is allocated by UPF and provided to SMF.

2.6. The SMF returns Nsmf_PDUSession_CreateSMContext Response. This message includes a cause value indicating whether the request is accepted or not. This message also includes the SM context ID allocated by SMF. The AMF can use the SM context ID for subsequent message towards the SMF.

2.7. The SMF sends Namf_Communication_N1N2MessageTransfer to AMF. This message includes parameters like PDU Session ID, N2 SM information (e.g., PDU Session ID, QFI(s), QoS Profile(s), N3 Tunnel Info of UPF, S-NSSAI, etc.), N1 SM container including the PDU Session Establishment Accept (e.g., QoS Rule(s), S-NSSAI(s), DNN, etc.)). The AMF sends response to SMF.

2.8. The AMF sends the N2 PDU Session Request to RAN. This message includes N2 SM information, NAS message such as PDU Session ID, N1 SM container that includes PDU Session Establishment Accept.

2.9. The RAN can issue AN specific signaling exchange with the UE that is related with the information received from SMF. For example, an RRC Connection Reconfiguration can take place with the UE to establish the necessary NG-RAN resources related to the QoS Profiles for the PDU Session request. RAN also allocates N3 Tunnel Info for the PDU Session.

2.10. RAN sends N2 PDU Session Response to AMF. This message includes parameters like PDU Session ID, cause, N2 SM information (e.g., PDU Session ID, N3 Tunnel Info, list of accepted/rejected QFI(s), etc.).

2.11. AMF sends Nsmf_PDUSession_UpdateSMContext Request, including SMF SM Context ID, N2 SM information, Request Type, etc. to SMF.

2.12. The SMF initiates an N4 Session Modification procedure with the UPF to provide the N3 tunnel information received from RAN.

2.13. The SMF sends Nsmf_PDUSession_UpdateSMContext Response to AMF.

2.14. The SMF sends Nsmf_PDUSession_SMContextStatusNotify to the AMF so the AMF knows the PDU Session has been established successfully and maintains the mapping between PDU Session ID and SMF ID.

A unicast PDU session can be established according to the signaling sequence illustrated in FIG. 2. However, such signaling sequence is not applicable to MBS sessions because an MBS session is shared by a group of UE with one or more mobile devices. The MBS session can be established before a UE in the group joins the session. The establishment of the MBS session can also be initiated after the UE indicates that it wants to join the session. This patent document discloses various techniques that can be implemented to enable MBS session establishment and management in various scenarios.

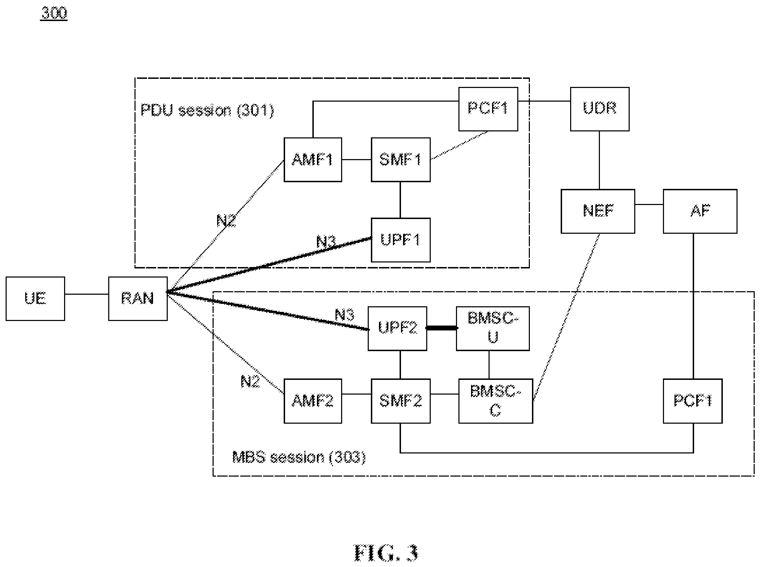

FIG. 3 illustrates an example architecture 300 showing interfaces for a unicast session 301 and an MBS session 303 in accordance with present technology. As shown in FIG. 3, the RAN provides both unicast service and MBS service to the UE simultaneously. The UE can access a unicast service via AMF1, PCF1, SMF1 and UPF1 using the unicast PDU session. At the same time, the UE can access an MBS service via AMF2, PCF2, SMF2 and UPF2 using the MBS session. The MBS session can be shared by a group of UEs via a single N3 tunnel between the RAN and UPF2.

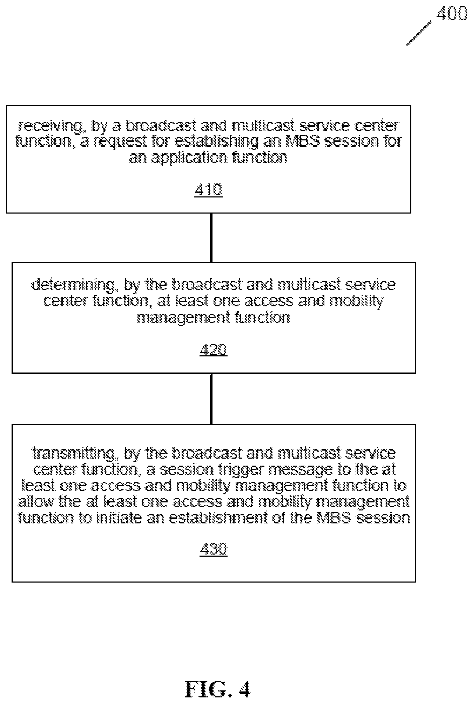

FIG. 4 illustrates an example flowchart of a method 400 for wireless communication in accordance with the present technology. The method 400 includes, at operation 410, receiving, by a broadcast and multicast service center function, a request for establishing an MBS session for an application function. The request comprises information indicating a target area for an MBS service associated with the MBS session. The method 400 includes, at operation 420, determining, by the broadcast and multicast service center function, at least one access and mobility management function based on the information. The method 400 includes, at operation 430, transmitting, by the broadcast and multicast service center function, a session trigger message to the at least one access and mobility management function to allow the at least one access and mobility management function to initiate an establishment of the MBS session.

In some embodiments, the information indicating the target area for the MBS service comprises a Tracking Area Identity (TAI) list. In some embodiments, the request further comprises an identifier identifying an MBS service associated with the MBS session. In some embodiments, the session trigger message comprises the identifier identifying the MBS service and a first internet protocol (IP) multicast address associated the identifier..

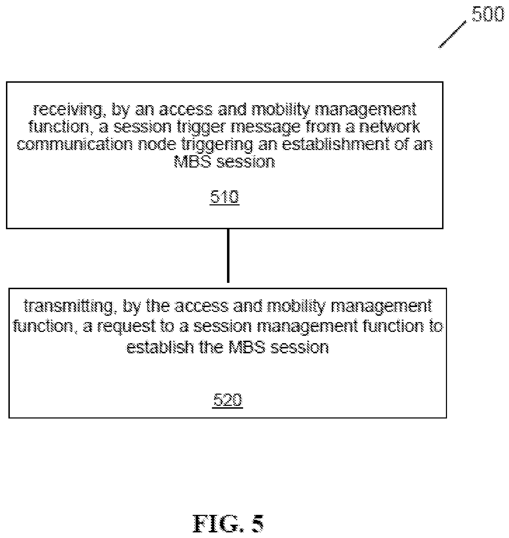

FIG. 5 illustrates an example flowchart of a method 500 for wireless communication in accordance with the present technology. The method 500 includes, at operation 510, receiving, by an access and mobility management function, a session trigger message from a network communication node triggering an establishment of an MBS session. The session trigger message comprising an identifier identifying an MBS service associated with the MBS session, such as a Temporary Mobile Group Identity (TMGI). The method 500 includes, at operation 520, transmitting, by the access and mobility management function, a request to a session management function to establish the MBS session. In some embodiments, the network communication node comprises a broadcast and multicast service center function. In some embodiments, the network communication node comprises a network exposure function. In some embodiments, the session trigger message comprises an IP multicast address associated the identifier identifying the MBS session. In some embodiments, receiving, by the access and mobility management function, a response indicating the establishment of the MBS session. The response includes a PDU Session ID identifying the MBS session allocated by the session management function for the MBS session.

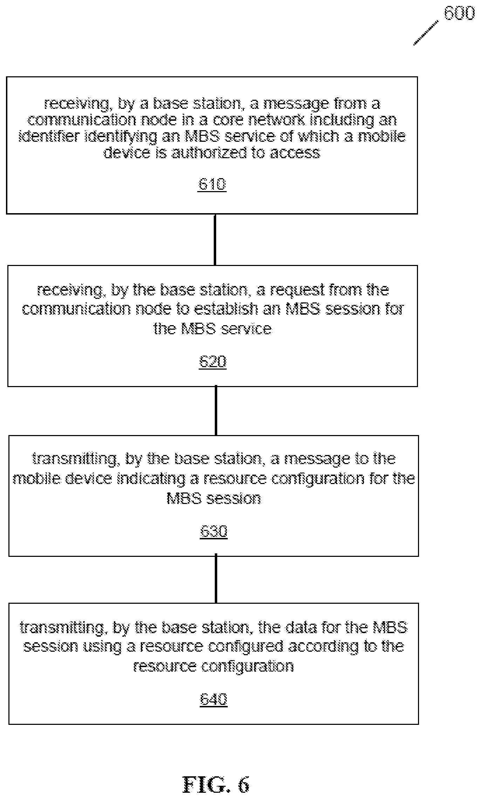

FIG. 6 illustrates an example flowchart of a method 600 for wireless communication in accordance with the present technology. The method 600 includes, at operation 610, receiving, by a base station, a message from a communication node in a core network. The message includes an identifier identifying an MBS service of which the UE is authorized to receive data, such as a Temporary Mobile Group Identity (TMGI). The method 600 includes, at operation 620, receiving, by the base station, a request from the communication node to establish an MBS session for the MBS service. The request includes the identifier identifying the MBS service and a quality of service profile of the MBS session. The method 600 includes, at operation 630, transmitting, by the base station, a message to a mobile device that is authorized to access the MBS service. The message indicates a resource configuration for the MBS session. The resource configuration is determined in part based on the quality of service profile associated with the MBS session. The method 600 also includes, at operation 640, transmitting, by the base station, the data for the MBS session using a resource configured according to the resource configuration.

In some embodiments, the resource configuration comprises a point-to-point resource configuration. In some embodiments, the point-to-point resource configuration is used in case the mobile device is in a connected state. In some embodiments, the resource configuration comprises a point-to-multipoint resource configuration. In some embodiments, the point-to-multipoint resource configuration is used in case the mobile device is in an idle state. In some embodiments, the resource configuration is determined further based on a number of mobile devices that are interested in accessing the MBS service

As further described in the present document, the above-described methods enable flexible MBS session establishment and management in different scenarios. Some examples of the disclosed techniques are further described in the following example embodiments.

### Embodiment 1

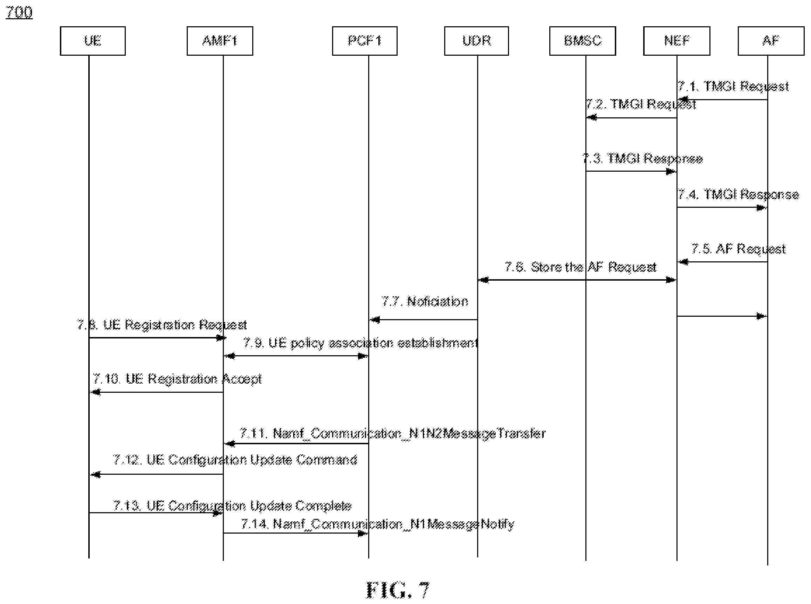

FIG. 7 illustrates an example signaling sequence 700 for requesting an MBS configuration in accordance with the present technology. The MBS configuration includes a Temporary Mobile Group Identity (TMGI) and associated IP multicast address. The TMGI is used on the radio interface to uniquely identify the MBS service. The IP multicast address is to identify the MBS service in IP layer. In this example, the control plane and the user plane of BMSC are coupled/co-located.

7.1. The AF transmits a TMGI Request message to the NEF to have the BMSC allocate one or more TMGIs to it. The TMGI Request includes the number of requested TMGIs.

7.2. The NEF authorizes whether the AF is allowed to request the TMGIs. If yes, the NEF forwards the TMGI request to the BMSC.

7.3. The BMSC allocates a set of TMGIs, each TMGI associated with an IP multicast address. The BMSC determines an expiration time for the TMGIs. The BMSC returns the set of TMGIs and the associated IP multicast address(s) to NEF in a TMGI response.

7.4. The NEF forwards the TMGI response to AF.

7.5. The AF starts to provision the MBS service in the network. The AF sends an AF request to the NEF. The AF request includes the Application information, the S-NSSAI and DNN, the TMGI, IP multicast address, and/or a target ID. The target ID identifies the group of UE which can receive the MBS service. For Multicast service, the target ID can identify the external group ID. For Broadcast service, the target ID can identify any UE. This message can also include information indicating the location of the UE(s) that have joined the MBS service so that the target area of MBS service can be determined when the MBS Session starts.

7.6. For multicast service, the NEF maps the target ID (e.g., external group ID) to the internal group ID. The NEF stores the internal group ID and the information of AF request in the UDR.

7.7. If the PCF1 has subscribed the AF request information from the UDR, the UDR sends notification message to the PCF1 including the internal group ID and new information of the AF request. The PCF1 then uses the AF request information to generate the new UE policy. The new UE policy indicates the IP multicast address of the MBS service. The new UE policy also indicates which S-NSSAI and DNN can be used for a unicast PDU Session via which the UE can join the MBS service identified by IP multicast address.

7.8. The UE performs UE registration procedure to the network. This operation can occur prior to operation 7.7.

7.9. During the UE registration procedure, the AMF1 establishes the UE policy association towards the PCF1. The AMF1 retrieves the UE internal group ID as UE subscription from the UDM. The AMF1 provides the UE internal group ID to the PCF1.

7.10. If the UE registration is accepted, the AMF1 sends Registration Accept to the UE.

7.11. The PCF1 checks the UE internal group ID and determines whether the UE policy needs be updated. If needed the PCF1 sends the Namf_Communication_N1N2MessageTransfer service operation towards the AMF1, including the new UE policy.

7.12. The AMF1 sends UE Configuration Update command to the UE, including the new UE policy.

7.14. The UE stores the new UE policy and sends UE Configuration Update complete to the AMF1.

7.15. The AMF1 sends the Namf_Communication_N MessageNotify to PCF1 to notify that the UE has successfully stored the new UE policy.

### Embodiment 2

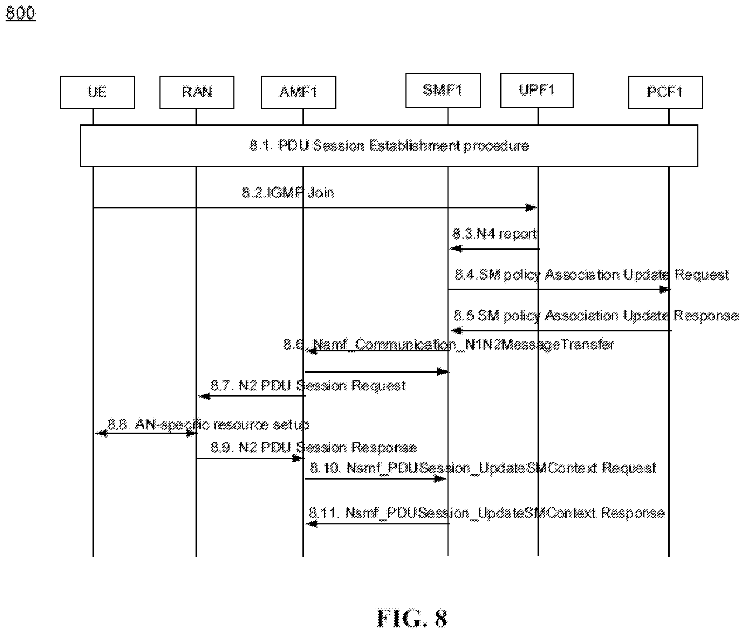

FIG. 8 illustrates an example signaling sequence 800 for a UE to access an Multicast service in accordance with the present technology. In this example, the network first authorizes whether a UE can access the Multicast service. This example procedure can be performed before the Multicast session starts.

8.1. The UE can obtain the IP multicast address via application layer information exchange. When the UE wants to access the Multicast service, the UE sends an IGMP Join message with the target IP multicast address which identifies the Multicast service at the IP layer. The UE checks the UE policy to determine the S-NSSAI and DNN associated with this IP multicast address and find whether there is an existing PDU session with this S-NSSAI and DNN. If no PDU session is found, the UE first establishes the unicast PDU Session with the associated S-NSSAI and DNN. This unicast PDU Session is associated with the Multicast service. During the PDU Session establishment, the SMF1 establishes the SM policy association towards the PCF1 and also provides the UE internal group id to the PCF1.

8.2. The UE sends the IGMP Join message over the user plane of the unicast PDU session associated with the Multicast service.

8.3. The UPF1 detects the IGMP Join message and reports to the SMF1 the detected IP multicast address.

8.4. The SMF1 sends SM policy association update request to the PCF1, including the IP multicast address.

8.5. The PCF1 already has information about the internal group ID and corresponding IP multicast address received from the UDR. Thus, the PCF1 can check if the UE internal group ID matches the internal group ID of the IP multicast address. If yes, the UE is authorized to access the Multicast service and the PCF1 returns the SM policy Association Update Response message to the SMF1. This message includes the IP multicast address and the associated TMGI.

8.6 The SMF1 stores the authorized IP multicast address and the associated TMGI in the UE context. The SMF1 then sends the Namf_Communication_N1N2MessageTransfer to the AMF1, in which the N1 message container (e.g., PDU Session Modification Command) includes the TMGI and the IP multicast address. The N2 message container also includes the TMGI.

8.7. The AMF1 sends the N2 PDU Session Request to the RAN, together with the N1 message container and N2 message container. The N2 message container also includes the TMGI.

8.8. The RAN uses Access Network (AN) specific signaling to send the N1 message container to the UE. The UE knows it is allowed to access the Multicast service identified by TMGI. The RAN also stores the TMGI in the UE context so the RAN knows the UE is allowed to receive the Multicast service. The Multicast service is identified by TMGI.

8.9. The RAN return the N2 PDU Session Response to the AMF1.

8.10. The AMF1 sends the Nsmf_PDUSession_UpdateSMContextRequest to the SMF1.

8.11. The SMF1 sends the Nsmf_PDUSession_UpdateSMContextResponse to the AMF1.

The UE is then authorized to access the Multicast service identified by the TMGI, which is associated with the IP multicast address. When the UE enters IDLE state, the UE context in RAN is released. However, when the UE enters CONNECTED state, the SMF provides the authorized TMGI to the RAN again. The authorized TMGI is also provided within the UE context to target RAN during inter RAN nodes handover.

The PCF1 also subscribes the UE location from the AMF. When the UE location changes, the AMF can report the current UE location to the PCF1. The PCF1 then reports the UE location to the AF. Based on the location of the UE within the group, the AF can use the UE locations to determine the new target area of the Multicast session. The AF may sends BMSC to modify the Multicast Session, such as adding new N3 tunnels towards the RAN nodes in the new target area, or removing N3 tunnels towards the RAN nodes outside of the new target area.

### Embodiment 3

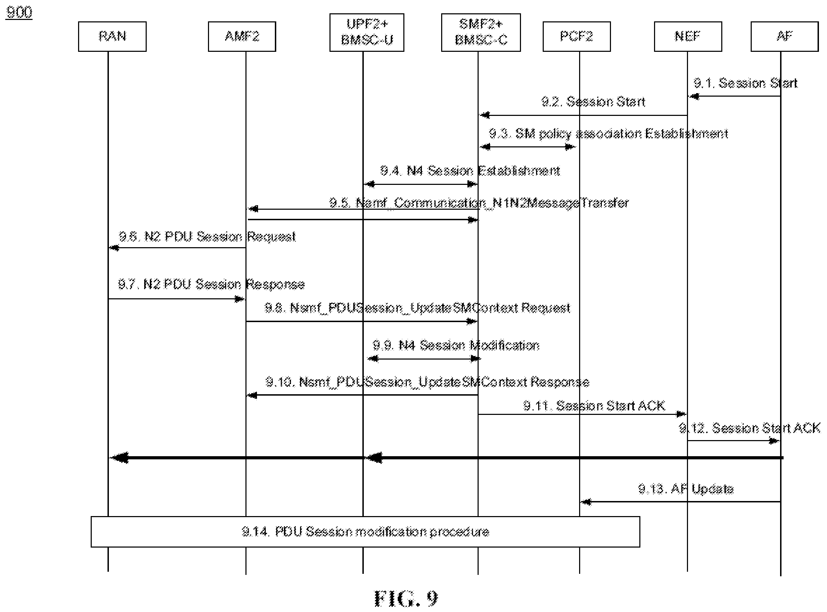

FIG. 9 illustrates an example signaling sequence 900 for establishing an MBS session in accordance with the present technology. In this example, the SMF2 is collocated with the BMSC-C while the UPF2 is collocated with the BMSC-U. After the example procedure completes, the RAN can receive MBS downlink data via the shared N3 tunnel of the MBS session.

9.1. The AF invokes the NEF service operation via an AF request. The content of this service operation (e.g., AF request) includes an AF Transaction ID, the requested S-NSSAI, the requested DNN, the requested Session and Service Continuity (SSC) mode. These parameters are used to establish the MBS Session. The content also includes the TMGI, the IP multicast address, and/or the target area serving the MBS session.

9.2. The NEF authorizes whether the AF is allowed to start the MBS session. The NEF translates the target area into TAI list and forwards the Session Start to the BSMC-C, which is co-located with the SMF2.

9.3 The co-located BSMC-C/SMF2 creates MBS Session context associated with the TMGI. Based on local configuration, the BSMC-C/SMF2 allocates a PDU Session ID. The PDU Session ID can not only identify the unicast PDU session but can also be used to identify the MBS session. The BSMC-C/SMF2 selects PCF2 to establish the SM policy association. The BSMC-C/SMF2 also sends the TMGI and IP multicast address to the PCF2.

9.4 The BSMC-C/SMF2 selects the BSMC-U/UPF2 that supports the MBS session. The BSMC-C/SMF2 establishes the N4 association with the selected BSMC-U/UPF2. The BSMC-C/SMF2 sends the forwarding rules including the IP multicast address to the BSMC-U/UPF2 so the UPF2 can forward the downlink MBMS traffic over the shared N3 tunnel towards the RAN. The shared N3 tunnel information is allocated by BSMC-U/UPF2 and provided to BSMC-C/SMF2.

9.5. The BSMC-C/SMF2 discovers the AMF2 based on the TAI list received in operation 9.2. The BSMC-C/SMF2 sends Namf_Communication_N1N2MessageTransfer to AMF2. This message includes parameters like the PDU Session ID, the TAI list, the N2 SM information such as the PDU Session ID, TMGI, QFI(s), QoS Profile(s), N3 tunnel info of BSMC-U/UPF2, S-NSSAI, etc. Because the PDU session is not a unicast session for a single UE, the BSMC-C/SMF2 doesn't need to send the N1 container message. The AMF2 then sends the response to BSMC-C/SMF2.

The BSMC-C/SMF2 can select multiple AMF2 based on the TAI list. Operation 9.5 can be performed for each selected AMF2.

9.6 The AMF2 selects a list of RAN nodes according to the TAI list received in Operation 9.5. The AMF2 then sends a N2 PDU Session Request to each RAN node. This request carries the AMF NGAP UE ID, the TMGI, and N2 SM information received from the BSMC-C/SMF2.

The AMF2 can select multiple RAN nodes based on the TAI list. Operation 9.6 can be performed for each selected RAN node.

9.7 The RAN creates an MBS Session context associated with the TMGI and can reserve AN specific resource for the MBS Session. The RAN can start broadcasting the TMGI over Uu interface. By obtaining the TMGI in the broadcast information, the UE determines whether it can access the RAN node to receive MBS service associated with this TMGI.

In some embodiments, the RAN can reserve the AN specific resource at a later stage. When no UE has interest in MBS service under the cell, there is no need for the RAN to allocate MBS resource for the MBS service. When the RAN receives downlink packets over the N3 tunnel, it can discard them as the radio resource has not been reserved.

The RAN sends a N2 PDU Session Response to AMF2. This message includes a new allocated RAN NGAP UE ID. The AMF2 uses the RAN NGAP UE ID for subsequent N2 messages to the RAN node to modify the MBS session. This message can also include parameters like a PDU Session ID, Cause, N2 SM information such as the PDU Session ID, N3 Tunnel Info, List of accepted/rejected QFI(s), etc.

9.8 For each RAN response, the AMF2 sends Nsmf_PDUSession_UpdateSMContext Request including PDU Session ID, N2 SM information, to BSMC-C/SMF2.

9.9 For each Request received from AMF2, the BSMC-C/SMF2 initiates an N4 Session Modification procedure with the BSMC-U/UPF2 to provide the N3 tunnel information received from RAN node. The BSMC-U/UPF2 then associates each N3 tunnel information of the RAN node with the MBS Session.

If there are multiple RANs associated with the MBS Session, the BSMC-U/UPF2 duplicates and forwards the MBS downlink traffic to each of the RAN nodes over the corresponding N3 tunnel.

If BSMC-U/UPF2 has not allocated the BMSC-U IP address and port number for the MBS session, the BSMC-U/UPF2 allocates BMSC-U IP address and/or port number for the MBS session and provides them to the BMSC-C/SMF2.

9.10 The BMSC-C/SMF2 sends Nsmf_PDUSession_UpdateSMContext Response to AMF2.

9.11. The SMF2 return the Session Start ack to the NEF, including the TMGI, and the optional (e.g., BMSC-U IP address, and port number).

9.12. The NEF sends Session Start Ack to AF, including the TMGI, the optional (e.g., BMSC-U IP address and port number). The AF then sends downlink traffic towards the BMSC-U IP address and port number. The BMSC-U/UPF2 then generates the MBS downlink traffic (e.g., using the IP multicast address as target IP address) and forwards the downlink MBS traffic towards the RAN node(s) over each N3 tunnel.

9.13. If the AF wants to modify the QoS information of the MBS Session, it discovers the PCF2 serving the MBS session by using the IP multicast address via Binding Support Function (BSF). Then AF provides new application/service information towards the PCF2.

9.14. The PCF2 initiates the PDU session Modification procedure to modify the QoS information of the MBS session.

### Embodiment 4

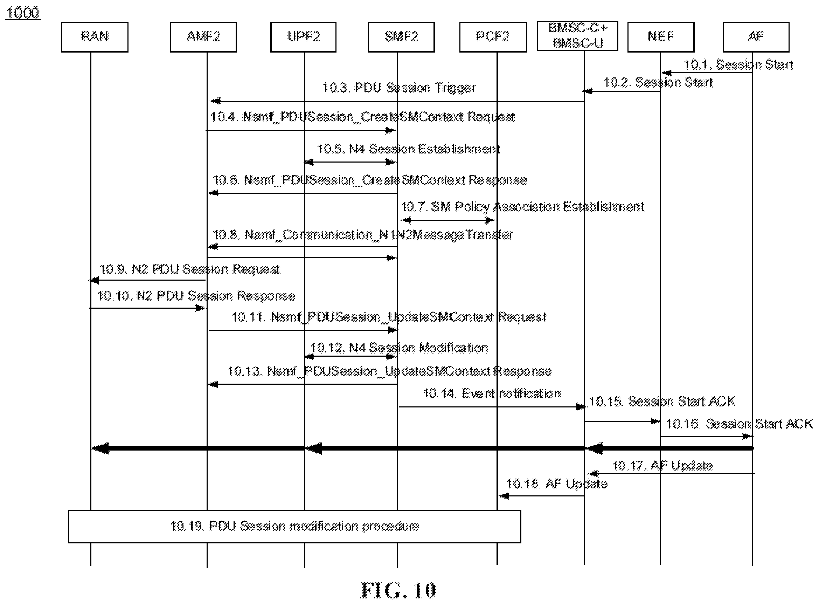

FIG. 10 illustrates another example signaling sequence 1000 for establishing an MBS session in accordance with the present technology. In this example, the BMSC-C and BMSC-U are co-located. The BMSC-C and BMSC-U can also be deployed in a distributed manner. Multiple SMF and/or UPF that can serve the MBS session.

10.1 The AF invokes NEF service operation via an AF request. The content of this service operation (e.g., AF request) contains an AF Transaction Id, the requested S-NSSAI, the requested DNN, the requested SSC mode. These parameters are used to establish the MBS Session. The content also includes the TMGI, the IP multicast address, and/or the target area serving the PDU session. The AF may also include AF subscription information to subscribe to events related with PDU Sessions so the AF can receive the corresponding notifications (AF notification reporting information).

10.2. The NEF authorizes whether the AF is allowed to start the MBS session. The NEF translates the target area into TAI list and forwards the Session Start to BMSC.

10.3. The BMSC translates the target area into a TAI list. The BMSC discovers the corresponding AMF(s) serving the TAI list via NRF. Instead of interacting with the SMF, the BMSC can send a Session Trigger message to each of the selected AMF2. This message includes the TMGI, the requested S-NSSAI, the requested DNN, the requested SSC mode, and/or the target TAI list. The message can also include the event subscription information comprising the BMSC address and a notification correlation ID.

The BMSC can select multiple AMF2 based on the TAI list. Operation 10.3 can be performed for each selected AMF2.

10.4. After receiving the session trigger message from the BMSC, the AMF2 creates an MBS Session context associated with the TMGI. The AMF2 discovers the SMF2 via NRF by using selection parameters including the S-NSSAI, the DNN, and/or the TAI list. The AMF2 sends a Nsmf_PDUSession_CreateSMContext Request to the selected SMF2. This message includes TMGI, DNN, S-NSSAI(s), AMF ID, User location information, AF subscription information, etc. The User location may include the TAI list received from the BMSC.

10.5. The SMF2 creates a MBMS context associated with the TMGI. Based on local configuration, the SMF2 allocates a PDU Session ID for the MBS session. The SMF2 selects a UPF that supports the MBMS service. The SMF2 establishes the N4 association with the selected UPF2. The shared N3 tunnel information is allocated by UPF2 and provided to SMF2. The SMF2 can also allocate an IP address for the MBS Session.

10.6. The SMF2 returns a Nsmf_PDUSession_CreateSMContext Response. This message includes a cause value indicating whether the request is accepted or not. This message also includes the PDU Session ID and a SM context ID allocated by SMF2. The AMF2 can use the SM context ID for subsequent message towards the SMF2.

10.7. If PCF2 is deployed, the SMF2 can establish the association with PCF2 so the PCF2 can provide Session related policy to the SMF2. The SMF2 also sends the TMGI and IP multicast address of the MBS Session to the PCF2. The SMF2 can also provide the new allocated IP address for the MBS Session to the PCF2.

10.8. The SMF2 sends Namf_Communication_N1N2MessageTransfer to AMF2. This message includes parameters like the PDU Session ID, and/or N2 SM information such as the PDU Session ID, TMGI, QFI(s), QoS Profile(s), N3 Tunnel Info of UPF, S-NSSAI, etc. Because the MBS session is a session for a group of UEs, rather than a single UE, the SMF2 doesn't need to send the N1 message. After receiving the AMF2 sends the response to SMF2.

10.9 The AMF2 selects a list of RAN nodes according to the TAI list. The AMF sends an N2 PDU Session Request to each of the RAN nodes. This message carries the AMF NGAP UE ID, the TMGI, and N2 SM information received from the SMF2.

The AMF can select multiple RAN nodes based on the TAI list. Operation 10.9 can be performed for each selected RAN node.

10.10. The RAN creates an MBS Session context associated the TMGI and can reserve AN specific resource for the MBS service. The RAN can start broadcasting the TMGI over Uu interface. By obtaining the TMGI in the broadcast information, the UE determines whether it can access the RAN to receive MBS service associated with this TMGI.

In some embodiments, the RAN can reserve the AN specific resource at a later stage. When no UE has interest in MBS service under the cell, there is no need for the RAN to allocate MBS resource for the MBS service. When the RAN receives downlink packets over the N3 tunnel, it can discard them as the radio resource has not been reserved.

The RAN sends a N2 PDU Session Response to AMF2. This message includes a new allocated RAN NGAP UE ID. The AMF2 uses the RAN NGAP UE ID for subsequent N2 messages to the RAN to modify the MBS session. This message can also include parameters like a PDU Session ID, Cause, N2 SM information such as the PDU Session ID, N3 Tunnel Info, List of accepted/rejected QFI(s), etc.

10.11 For each RAN response, the AMF2 sends Nsmf_PDUSession_UpdateSMContext Request including SMF SM Context ID, N2 SM information to SMF2.

10.12 For each Request received from AMF2, the SMF2 initiates an N4 Session Modification procedure with the UPF2 to provide the N3 tunnel information received from RAN node. The UPF2 then associates each N3 tunnel information of the RAN node with the MBS Session.

If there are multiple RANs associated with the MBS Session, the UPF2 duplicates and forwards the MBS downlink traffic to each of the RAN nodes over the corresponding N3 tunnel.

If UPF2 has not allocated the UPF2 IP address and port number for the MBS session, the UPF2 allocates UPF2 IP address and port number for the MBS session and provides them to the SMF2.

10.13. The SMF2 sends Nsmf_PDUSession_UpdateSMContext Response to AMF2.

10.14 According to the subscription information received in Operation 10.4, the SMF2 sends a notification to the BMSC together with the notification correlation ID. The notification message includes TMGI and the UPF2 IP address and port number allocated for the MBS Session. In some embodiments, the notification message can also include the IP address for the MBS Session.

10.15 If BSMC-U has not allocated the BMSC-U IP address and port number for the MBS session, the BSMC-U allocates BMSC-U IP address and/or port number for the MBS session. The BMSC returns the Session Start ack to the NEF, including the TMGI, BMSC-U IP address and port number.

10.16 The NEF sends Session Start Ack to AF, including the TMGI, BMSC-U IP address and port number. The AF then sends downlink traffic towards the BMSC-U IP address and port number. The BMSC-U generates the downlink MBS traffic (using the IP multicast address as target IP address) and sends them towards UPF2 via IP in the IP tunnel (the target address of the tunnel is the IP address of the UPF2). If multiple MBS sessions have been established for the MBS service, the BMSC-U duplicates the downlink MBS traffic towards the respective UPF2 via different IP in IP tunnel. The UPF2 then removes the outer tunnel header and duplicates and forwards the downlink MBS traffic towards each RAN node over shared N3 tunnel associated with the MBS session.

The BMSC may send session trigger message to multiple AMFs in parallel so there can be multiple MBS Sessions established. In this case, the RAN only maintain one MBS Session context per TMGI.

10.17. If the AF/BMSC wants to modify the QoS information of the MBS traffic, it discovers the PCF2 serving the MBS session by using the IP multicast address of the MBS Session via BSF. The BSF may return multiple PCF(s) serving the MBS session. Alternatively, the BMSC may use the IP address for the MBS Session to query the BSF to determine the PCF of the MBS session for modification. Then BMSC provides new application/service information together with the TMGI and/or the IP multicast address towards the PCF2 for each MBS Session.

10.18. The PCF2 initiates the PDU session Modification procedure to modify the QoS information of each MBS Session. If there are multiple MBS sessions are associated with the TMGI and/or the IP multicast address, Operation 10.18 can be performed for each MBS session.

### Embodiment 5

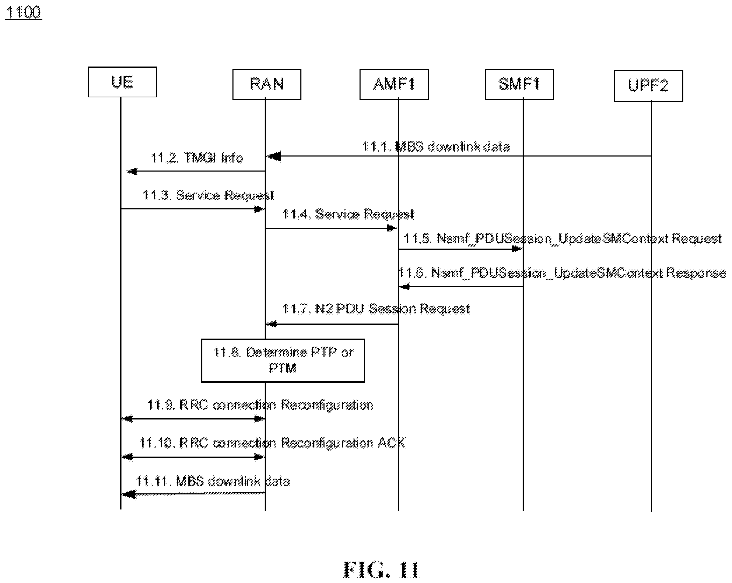

FIG. 11 illustrates an example signaling sequence 1100 for configuring radio resource for a MBS Session in accordance with the present technology. When the session context is established, the RAN determines whether the MBS downlink data is sent to UE using point-to-point (PTP) resources or point-to-multipoint (PTM) resources. The RAN makes decision based on the number of UEs who have such interest on the MBS service within the same cell. After a UE joins the MBS session, the UE can turn into the IDLE state and the UE context in RAN is released. In order to receive the MBS service, the UE need to be in the CONNECTED state again so that the RAN can create the UE context and determine whether the UE is authorized to receive the MBS service.

11.1. The RAN receives MBS downlink data over the N3 tunnel of MBS session.

11.2 The RAN broadcasts the TMGI of the MBS service to multiple UEs after the MBS Session context has been established in RAN.

11.3 A UE obtains the TMGI via the broadcast channel. If the UE is interested in accessing the MBS service identified by the TMGI and a unicast PDU Session associated with the MBMS service has not been activated, the UE initiates Service Request procedure to activate the unicast PDU Session associated with the MBS service.

11.4 The RAN forwards the Service Request to the AMF1. The Service Request message includes the PDU Session ID identifying the PDU session to be reactivated.

11.5 Based on the PDU Session ID, the AMF1 determines the SMF1 and sends the Nsmf_PDUSession_UpdateSMContext Request to the SMF1 to activate the PDU Session.

11.6 The SMF1 returns the Nsmf_PDUSession_UpdateSMContext Response. This response message includes the authorized TMGI in the N2 message container.

11.7 The AMF1 sends the N2 PDU Session Request to the RAN, together with the N2 message container.

11.8 If the RAN receives the TMGI from the network, the UE is authorized to receive the MBS service. The RAN determines whether to use PTP resources (e.g., when the UE is in the CONNECTED state) or PTM resources (e.g., when the UE is in the IDLE state) to deliver the MBS downlink traffic to the UE. The RAN can also make decisions based on the number of the UE who has interest on this service in the same cell.

11.9 The RAN sends an RRC Connection Reconfiguration message to the UE to configure the PTP resource or PTM resource for the MBS service. The resource configuration is determined in part based on the quality of service profile associated with the MBS session.

11.10 The UE sends RRC connection Reconfiguration ACK to the RAN.

11.11 If PTP resources are configured, the RAN delivers the MBS downlink traffic via PTP resources to the UE. Alternatively, the RAN delivers the MBS service via the configured PTM resources to the UE. In some embodiments, the UE can release the RRC connection and turn into the INACTIVE state while still being able to receive MBS service via PTM resources.

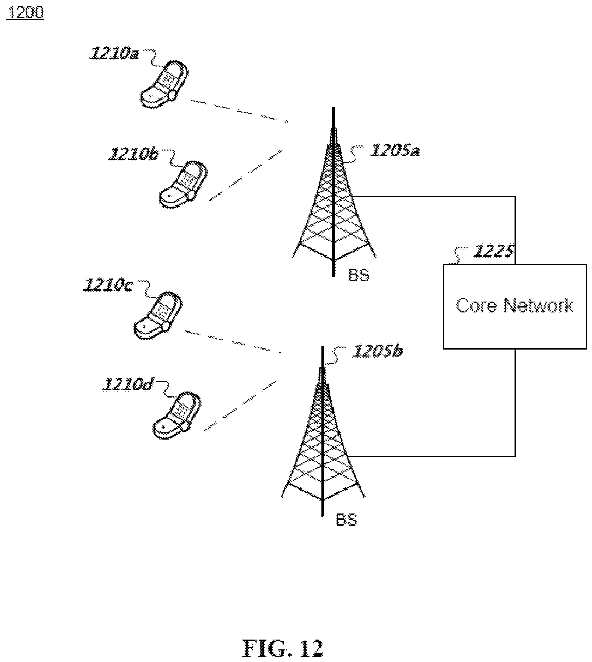

FIG. 12 shows an example of a wireless communication system 1200 where techniques in accordance with one or more embodiments of the present technology can be applied. A wireless communication system 1200 can include one or more base stations (BSs) 1205a, 1205b, one or more wireless devices 1210a, 1210b, 1210c, 1210d, and a core network 1225. A base station 1205a, 1205b can provide wireless service to wireless devices 1210a, 1210b, 1210c and 1210d in one or more wireless sectors. In some implementations, a base station 1205a, 1205b includes directional antennas to produce two or more directional beams to provide wireless coverage in different sectors.

The core network 1225 can communicate with one or more base stations 1205a, 1205b. The core network 1225 provides connectivity with other wireless communication systems and wired communication systems. The core network may include one or more service subscription databases to store information related to the subscribed wireless devices 1210a, 1210b, 1210c, and 1210d. A first base station 1205a can provide wireless service based on a first radio access technology, whereas a second base station 1205b can provide wireless service based on a second radio access technology. The base stations 1205a and 1205b may be co-located or may be separately installed in the field according to the deployment scenario. The wireless devices 1210a, 1210b, 1210c, and 1210d can support multiple different radio access technologies. The techniques and embodiments described in the present document may be implemented by the base stations of wireless devices described in the present document.

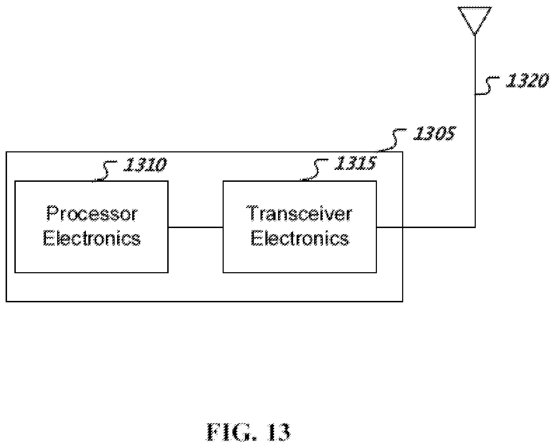

FIG. 13 is a block diagram representation of a portion of a radio station in accordance with one or more embodiments of the present technology can be applied. A radio station 1305 such as a base station or a wireless device (or UE) can include processor electronics 1310 such as a microprocessor that implements one or more of the wireless techniques presented in this document. The radio station 605 can include transceiver electronics 1315 to send and/or receive wireless signals over one or more communication interfaces such as antenna 1320. The radio station 1305 can include other communication interfaces for transmitting and receiving data. Radio station 1305 can include one or more memories (not explicitly shown) configured to store information such as data and/or instructions. In some implementations, the processor electronics 1310 can include at least a portion of the transceiver electronics 1315. In some embodiments, at least some of the disclosed techniques, modules or functions are implemented using the radio station 1305. In some embodiments, the radio station 1305 may be configured to perform the methods described herein.

It will be appreciated that the present document discloses techniques that can be embodied in various embodiments to establish and manage MBS sessions in various scenarios. The disclosed and other embodiments, modules and the functional operations described in this document can be implemented in digital electronic circuitry, or in computer software, firmware, or hardware, including the structures disclosed in this document.

The disclosed and other embodiments can be implemented as one or more computer program products, i.e., one or more modules of computer program instructions encoded on a computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal, that is generated to encode information for transmission to suitable receiver apparatus.

A computer program (also known as a program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this document can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random-access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

While this patent document contains many specifics, these should not be construed as limitations on the scope of any invention or of what may be claimed, but rather as descriptions of features that may be specific to particular embodiments of particular inventions. Certain features that are described in this patent document in the context of separate embodiments can also be implemented in combination in a single embodiment. Conversely, various features that are described in the context of a single embodiment can also be implemented in multiple embodiments separately or in any suitable subcombination.

Similarly, while operations are depicted in the drawings in a particular order, this should not be understood as requiring that such operations be performed in the particular order shown or in sequential order, or that all illustrated operations be performed, to achieve desirable results. Moreover, the separation of various system components in the embodiments described in this patent document should not be understood as requiring such separation in all embodiments.

The invention is defined by the appended claims.

## Claims

1. A wireless communication method, comprising:
receiving (410), by a broadcast and multicast service center function, a request for establishing a multicast or broadcast session for an application function, wherein the request comprises information indicating a first target area for a multicast or broadcast service associated with the multicast or broadcast session;
determining (420), by the broadcast and multicast service center function, at least one access and mobility management function based on the information; and
transmitting (430), by the broadcast and multicast service center function, a session trigger message to the at least one access and mobility management function to allow the at least one access and mobility management function to initiate an establishment of the multicast or broadcast session;
the method further comprising:
receiving, by the broadcast and multicast center function from the application function, a request to modify the multicast or broadcast session based on a second target area of the multicast or broadcast session, wherein the second target area is determined based on a location of one or more mobile devices authorized to access the multicast or broadcast service, and wherein the location of the one or more mobile devices is reported by the at least one access and mobility management function.

2. The method of claim 1, wherein the information indicating the target area for the multicast or broadcast service comprises a Tracking Area Identity, TAI, list.

3. The method of claim 1 or 2, wherein the request further comprises an identifier identifying a multicast or broadcast service associated with the multicast or broadcast session.

4. The method of any of claims 1 to 3, wherein the session trigger message comprises the identifier identifying the multicast or broadcast service and a first internet protocol, IP, address associated with the identifier.

5. A method for wireless communication, comprising:
receiving (510), by an access and mobility management function, a session trigger message from a broadcast and multicast service center function, BMSC, triggering an establishment of a multicast or broadcast session, wherein the session trigger message comprises an identifier identifying a multicast or broadcast service associated with the multicast or broadcast session, wherein the session trigger message indicates a first target area for a multicast and broadcast service; and
transmitting (520), by the access and mobility management function, a request to a session management function to establish the multicast or broadcast session;
the method further comprising:
reporting, by the access and mobility management function, a location of one or more mobile devices authorized to access the multicast or broadcast service, wherein a second target area of the multicast or broadcast session is determined based on the location of the one or more mobile devices, and wherein the multicast or broadcast session is requested to be modified based on the second target area.

6. The method of claim 5, wherein the session trigger message comprises a Tracking Area Identity, TAI, list to indicate the target area for the multicast and broadcast service.

7. The method of claim 5 or 6, wherein the session trigger message comprises an **IP** multicast address associated the identifier identifying the multicast or broadcast service.

8. The method of any of claims 5 to 7, comprising:
receiving, by the access and mobility management function, a response indicating the establishment of the multicast or broadcast session, wherein the response includes an identifier identifying the multicast or broadcast session allocated by the session management function for the multicast or broadcast service.

9. A communication apparatus (1305), comprising a processor (1310) configured to implement a method recited in any of claims 1 to 8.

10. A computer program product having code stored thereon, the code, when executed by a processor (1310) of a computing system, causing the computing system to implement a method recited in any one or more of claims 1 to 8.

## Patentansprüche

1. Drahtloses Kommunikationsverfahren, umfassend:
Empfangen (410), durch eine Broadcast- und Multicast-Service-Center-Funktion, einer Anforderung zum Herstellen einer Multicast- oder Broadcast-Sitzung für eine Anwendungsfunktion, wobei die Anforderung Information umfasst, die einen ersten Zielbereich für einen Multicast- oder Broadcast-Service, der der Multicast- oder Broadcast-Sitzung zugeordnet ist, angeben;
Bestimmen (420), durch die Broadcast- und Multicast-Service-Center-Funktion, mindestens einer Zugriffs- und Mobilitätsverwaltungsfunktion basierend auf der Information; und
Übertragen (430), durch die Broadcast- und Multicast-Service-Center-Funktion, einer Sitzungsauslösenachricht an die mindestens eine Zugriffs- und Mobilitätsverwaltungsfunktion, um der mindestens einen Zugriffs- und Mobilitätsverwaltungsfunktion zu ermöglichen, eine Herstellung der Multicast- oder Broadcast-Sitzung zu initiieren;
das Verfahren ferner umfassend:
Empfangen, durch die Broadcast- und Multicast-Center-Funktion von der Anwendungsfunktion, einer Anforderung, die Multicast- oder Broadcast-Sitzung basierend auf einem zweiten Zielbereich der Multicast- oder Broadcast-Sitzung zu ändern, wobei der zweite Zielbereich basierend auf einem Standort einer oder mehrerer mobiler Vorrichtungen bestimmt wird, die autorisiert sind, auf den Multicast- oder Broadcast-Service zuzugreifen, und wobei der Standort der einen oder der mehreren mobilen Vorrichtungen durch die mindestens eine Zugriffs- und Mobilitätsverwaltungsfunktion gemeldet wird.

2. Verfahren nach Anspruch 1, wobei die Information, die den Zielbereich für den Multicast- oder Broadcast-Service angibt, eine Verfolgungsbereichsidentititätsliste, TAI-Liste, umfasst.

3. Verfahren nach Anspruch 1 oder 2, wobei die Anforderung ferner einen Identifizierer umfasst, der einen Multicast- oder Broadcast-Service, der der Multicast- oder Broadcast-Sitzung zugeordnet ist, identifiziert.

4. Verfahren nach einem der Ansprüche 1 bis 3, wobei die Sitzungsauslösenachricht den Identifizierer, der den Multicast- oder Broadcast-Service identifiziert, und eine erste Internetprotokolladresse, IP-Adresse, die dem Identifizierer zugeordnet ist, umfasst.

5. Verfahren zur drahtlosen Kommunikation, umfassend:
Empfangen (510), durch eine Zugriffs- und Mobilitätsverwaltungsfunktion, einer Sitzungsauslösenachricht von einer Broadcast- und Multicast-Service-Center-Funktion, BMSC, die eine Herstellung einer Multicast- oder Broadcast-Sitzung auslöst, wobei die Sitzungsauslösenachricht einen Identifizierer umfasst, der einen Multicast- oder Broadcast-Service, der der Multicast- oder Broadcast-Sitzung zugeordnet ist, identifiziert, wobei die Sitzungsauslösenachricht einen ersten Zielbereich für einen Multicast- und Broadcast-Service angibt; und
Übertragen (520), durch die Zugriffs- und Mobilitätsverwaltungsfunktion, einer Anforderung an eine Sitzungsverwaltungsfunktion, die Multicast- oder Broadcast-Sitzung herzustellen;
das Verfahren ferner umfassend:
Melden, durch die Zugriffs- und Mobilitätsverwaltungsfunktion, eines Standorts einer oder mehrerer mobiler Vorrichtungen, die autorisiert sind, auf den Multicast- oder Broadcast-Service zuzugreifen, wobei ein zweiter Zielbereich der Multicast- oder Broadcast-Sitzung basierend auf dem Standort der einen oder der mehreren mobilen Vorrichtungen bestimmt wird und wobei ein Ändern der Multicast- oder Broadcast-Sitzung basierend auf dem zweiten Zielbereich angefordert wird.

6. Verfahren nach Anspruch 5, wobei die Sitzungsauslösenachricht eine Verfolgungsbereichsidentititätsliste, TAI-Liste, umfasst, um den Zielbereich für den Multicast- und Broadcast-Service anzugeben.

7. Verfahren nach Anspruch 5 oder 6, wobei die Sitzungsauslösenachricht eine IP-Multicast-Adresse umfasst, die dem Identifizierer, der den Multicast- oder Broadcast-Service identifiziert, zugeordnet ist.

8. Verfahren nach einem der Ansprüche 5 bis 7, umfassend:
Empfangen, durch die Zugriffs- und Mobilitätsverwaltungsfunktion, einer Antwort, die die Herstellung der Multicast- oder Broadcast-Sitzung angibt, wobei die Antwort einen Identifizierer einschließt, der die Multicast- oder Broadcast-Sitzung, die durch die Sitzungsverwaltungsfunktion für den Multicast- oder Broadcast-Service zugewiesen wird, identifiziert.

9. Kommunikationseinrichtung (1305), umfassend einen Prozessor (1310), der konfiguriert ist, um ein in einem der Ansprüche 1 bis 8 dargestelltes Verfahren zu implementieren.

10. Computerprogrammprodukt, das darauf gespeicherten Code aufweist, wobei der Code, wenn er durch einen Prozessor (1310) eines Rechensystems ausgeführt wird, das Rechensystem veranlasst, ein in einem der Ansprüche 1 bis 8 dargestelltes Verfahren zu implementieren.

## Revendications

1. Procédé de communication sans fil, comprenant :
la réception (410), par une fonction de centre de service de diffusion et de multidiffusion, d'une demande d'établissement d'une session de multidiffusion ou de diffusion pour une fonction d'application, dans lequel la demande comprend des informations indiquant une première zone cible pour un service de multidiffusion ou de diffusion associé à la session de multidiffusion ou de diffusion ;
la détermination (420), par la fonction de centre de service de diffusion et de multidiffusion, d'au moins une fonction de gestion d'accès et de mobilité sur la base des informations ; et
la transmission (430), par la fonction de centre de service de diffusion et de multidiffusion, d'un message de déclenchement de session à l'au moins une fonction de gestion d'accès et de mobilité pour permettre à l'au moins une fonction de gestion d'accès et de mobilité de lancer un établissement de la session de multidiffusion ou de diffusion ;
le procédé comprenant en outre :
la réception, par la fonction de centre de diffusion et de multidiffusion en provenance de la fonction d'application, d'une demande de modification de la session de multidiffusion ou de diffusion sur la base d'une seconde zone cible de la session de multidiffusion ou de diffusion, dans lequel la seconde zone cible est déterminée sur la base d'un emplacement d'un ou de plusieurs dispositifs mobiles autorisés à accéder au service de multidiffusion ou de diffusion, et dans lequel l'emplacement du ou des dispositifs mobiles est signalé par l'au moins une fonction de gestion d'accès et de mobilité.

2. Procédé selon la revendication 1, dans lequel les informations indiquant la zone cible pour le service de multidiffusion ou de diffusion comprennent une liste d'identités de zone de suivi, TAI.

3. Procédé selon la revendication 1 ou 2, dans lequel la demande comprend en outre un identifiant qui identifie un service de multidiffusion ou de diffusion associé à la session de multidiffusion ou de diffusion.

4. Procédé selon l'une quelconque des revendications 1 à 3, dans lequel le message de déclenchement de session comprend l'identifiant qui identifie le service de multidiffusion ou de diffusion et une première adresse de protocole Internet, **IP,** associée à l'identifiant.

5. Procédé pour une communication sans fil, comprenant :
la réception (510), par une fonction de gestion d'accès et de mobilité, d'un message de déclenchement de session en provenance d'une fonction de centre de service de diffusion et de multidiffusion, BMSC, déclenchant un établissement d'une session de multidiffusion ou de diffusion, dans lequel le message de déclenchement de session comprend un identifiant qui identifie un service de multidiffusion ou de diffusion associé à la session de multidiffusion ou de diffusion, dans lequel le message de déclenchement de session indique une première zone cible pour un service de multidiffusion et de diffusion ; et
la transmission (520), par la fonction de gestion d'accès et de mobilité, d'une demande à une fonction de gestion de session d'établissement de la session de multidiffusion ou de diffusion ;
le procédé comprenant en outre :
le fait de signaler, par la fonction de gestion d'accès et de mobilité, un emplacement d'un ou de plusieurs dispositifs mobiles autorisés à accéder au service de multidiffusion ou de diffusion, dans lequel une seconde zone cible de la session de multidiffusion ou de diffusion est déterminée sur la base de l'emplacement du ou des dispositifs mobiles, et dans lequel il est demandé à la session de multidiffusion ou de diffusion d'être modifiée sur la base de la seconde zone cible.

6. Procédé selon la revendication 5, dans lequel le message de déclenchement de session comprend une liste d'identités de zone de suivi, **TAI,** pour indiquer la zone cible pour le service de multidiffusion et de diffusion.

7. Procédé selon la revendication 5 ou 6, dans lequel le message de déclenchement de session comprend une adresse **IP** de multidiffusion associée à l'identifiant qui identifie le service de multidiffusion ou de diffusion.

8. Procédé selon l'une quelconque des revendications 5 à 7, comprenant :
la réception, par la fonction de gestion d'accès et de mobilité, d'une réponse indiquant l'établissement de la session de multidiffusion ou de diffusion, dans lequel la réponse comporte un identifiant qui identifie la session de multidiffusion ou de diffusion attribuée par la fonction de gestion de session pour le service de multidiffusion ou de diffusion.

9. Appareil de communication (1305), comprenant un processeur (1310) configuré pour mettre en œuvre un procédé selon l'une quelconque des revendications 1 à 8.

10. Produit-programme informatique ayant un code stocké sur celui-ci, le code, lorsqu'il est exécuté par un processeur (1310) d'un système informatique, amenant le système informatique à mettre en œuvre un procédé selon l'une quelconque des revendications 1 à 8.
